# EUROPEAN PATENT SPECIFICATION

(11) **EP 2 942 243 B1**
(45) Date of publication and mention of the grant of the patent: **02.08.2017**
(21) Application number: 14167696.5
(22) Date of filing: 09.05.2014
(51) Int. Cl.: B60R 21/0132

(54) **Activation of pedestrian protection mechanism**
Aktivierung eines Fußgängerschutzmechanismus
Activation du mécanisme de protection des piétons

(43) Date of publication of application: 11.11.2015
(73) Proprietor: Autoliv Development AB, 447 83 Vargarda (SE)
(72) Inventor: Le Merrer, Yann, 75020 Paris (FR); Loisy, Aurore, 60590 Villers sur Trie (FR); Mensales, Alexandre, 95410 Groslay (FR); Devavry, Arnaud, 95800 Cergy (FR)
(74) Representative: Kransell & Wennborg KB

(56) References cited:
- EP-A1- 1 710 131
- EP-A1- 1 808 343
- EP-A1- 1 832 479
- WO-A1-03/082639

## Description

### TECHNICAL FIELD

The invention relates to a method and a device in a vehicle for activating a pedestrian protection mechanism.

### BACKGROUND

A modern vehicle may be equipped with pedestrian protection means, such as a deployable bonnet and/or one or more airbags covering the windscreen and/or the A-pillars of the vehicle. These pedestrian protection means are arranged to create clearance to the engine block and other rigid structures beneath the hood, and are used in the art to protect pedestrians in case of collision with the vehicles, typically being cars. However, a problem in the art is that in case car speed is low, say 10 km/h, the protection means have a very limited, if any, protecting effect on the pedestrian, but activation of the protection system may cause damage to the car requiring expensive repair work. Thus, at low speeds, the protection means are effectively not needed. On the other hand, if the speed is high, say 100 km/h, the activation of the pedestrian protection means could even be counterproductive to the pedestrian as the protection means is not dimensioned for such a degree of collision impact.

EP 1227956 discloses a pedestrian protection impact system where in the event of collision the system is activated unless the vehicle speed is below a lower speed threshold or exceeds a higher speed threshold. However, if the vehicle speed attains a value between the lower and the upper speed threshold, the activation of the protection system, for instance manifested by deployment of an exterior airbag, will be controlled based on the vehicle speed. Thus, in case the vehicle speed immediately before the collision is above the lower speed threshold, but below an intermediate speed threshold, a delay between time of collision and the deployment of the airbag decreases with vehicle speed since when the vehicle is travelling faster, the pedestrian is likely to come into contact with the airbag more quickly.

On the other hand, in case the vehicle speed is above the intermediate speed threshold, but below the higher speed threshold, the required delay time is less than the minimum deployment time of the airbag, and so the airbag will be deployed at a higher rate (by increasing the gas pressure during inflation for example). As in the previous scenario, the delay time decreases with increasing vehicle speed. However, for vehicle speeds close to (but above) the intermediate speed threshold, the delay time is greater when the airbag is to be deployed at the higher rate than when it is deployed at the lower rate.

A problem with EP 1227956 is that if the vehicle speed is above the lower speed threshold and below the upper speed threshold, the airbag will, with a varying delay, always be deployed.

EP 1710131 discloses a method for classification of an impact between an object and a vehicle, comprising the steps of detecting an initial contact between the object and the vehicle, recording a width data relating to a width of an impact zone between the object and the vehicle, processing the width data for determining the width of the impact zone a predetermined time interval after the initial contact, forming a first criterion for deciding whether the object is a pedestrian by identifying if the determined width of the impact zone lies between predetermined lower and upper first threshold values, and determining that the object is human if the first criterion is met.

EP 1808343 discloses a device for controlling pedestrian protection means having acceleration sensors, which are arranged behind a bumper lining and produces a signal. A speed measuring device produces another signal. An evaluation circuit controls a pedestrian protection system based on the signals. The evaluation circuit suppresses the control of the pedestrian protection system, when one of the signals lies below a predetermined threshold value. The evaluation circuit is coupled with a brake assembly so that the circuit controls the pedestrian protection system based on a third signal of the assembly.

### SUMMARY

An object of the present invention is to solve, or at least mitigate, this problem in the art and provide an improved activation of a pedestrian protection mechanism.

This object is attained in a first aspect of the present invention by a method at a motor vehicle of activating a pedestrian protection mechanism. The method comprises acquiring a signal indicative of whether the motor vehicle impacts with an object and a signal indicative of vehicle speed before time of impact. Further, the method comprises acquiring a signal indicative of degree of impact with the object and determining, after a time period has elapsed since the time of impact, the time period being based at least on the acquired vehicle speed, whether a measure of the degree of impact is above a lower impact threshold and below an upper impact threshold; and if so, activating the pedestrian protection mechanism.

This object is attained in a second aspect of the present invention by an activation device configured to activate a pedestrian protection mechanism. The activation device is operative to acquire a signal indicative of whether the motor vehicle impacts with an object, a signal indicative of vehicle speed before time of impact, and a signal indicative of degree of impact with the object. Further, the activation device is operative to determine, after a time period has elapsed since the time of impact, the time period being based at least on the acquired vehicle speed, whether a measure of the degree of impact is above a lower impact threshold and below an upper impact threshold; and if so activate the pedestrian protection mechanism.

Thus, in case of vehicle collision with an object, the activation device waits for a time period being dependent on vehicle speed before instance of collision (and possibly other vehicle and/or object impact parameters) before taking a decision on whether to activate a pedestrian protection mechanism, such as e.g. an exterior airbag, or not. The activation device is typically embodied in the form of a microprocessor. During this time period, the activation device continuously or occasionally records a signal indicative of degree of impact with the object. Such a signal may for instance be recorded with the help of a contact sensor in a bumper of the vehicle. If after the time period has elapsed, it is determined that the degree of impact is above a lower impact threshold level but below an upper impact threshold level, the protection mechanism will be activated. Hence, the present invention will advantageously be more robust than prior art pedestrian protection devices in that a waiting period is applied before determining whether to activate the protection mechanism or not. This will advantageously facilitate avoidance of unnecessary activation of the protection mechanism, since the assessment of whether the protection mechanism should be activated or not can be performed with a greater degree of certainty after the time period has elapsed, and any possible initial transient effects can be disregarded.

Further advantageous is that by introducing the waiting period, i.e. the time period from the instance of collision up to the decision whether to activate the protection mechanism, activation of the protection mechanism can be controlled such that an optimal, or at least a close to optimal, timing can be provided for protection mechanism activation. For instance, a protection mechanism such as an airbag will typically deploy immediately upon activation and fully inflate within 20-40 milliseconds depending on model. After having been fully inflated, deflation begins immediately as gas escapes through vents in fabric of the airbag. It is important that the airbag does not deflate excessively before it is impacted by the pedestrian, as the deflation will reduce the cushioning effect of the airbag. Thus, by controlling the waiting period at least based on vehicle speed, the activation of the protection mechanism is undertaken such that pedestrian impacts with the protection mechanism with appropriate timing.

For instance, assuming that for a car travelling at 40km/h, the time period between the instant of collision with an object and the instant at which it can be detected, from a signal indicative of degree of impact with the object, whether the object is a pedestrian - or something causing a greater (or lesser) impact - is about 10 ms. Moreover, in order to ensure whether the object in fact is not a pedestrian but an object causing a high-energy (or low-energy) impact with the car, such as a tree or another vehicle, another 5 ms of settling of the signal indicative of degree of impact is typically required. Thus, the time period for detecting a high-energy impact is approximately 15 ms at a car speed of 40km/h.

Further, as previously was mentioned, it is assumed that a pedestrian protection mechanism such as a hood and/or windshield airbag will typically deploy immediately upon activation and fully inflate within about 30 ms. At 40 km/h, it is further assumed that the time period between pedestrian collision with the car and the pedestrian impacting the airbag is about 60 ms.

Thus, the activation device controlling the pedestrian protection mechanism will advantageously introduce a time period, i.e. a waiting period, from the instant of collision with the object to the instant at which it is determined whether the pedestrian protection mechanism, being e.g. an exterior airbag, should be activated or not in order to avoid deployment of the airbag in case of a high-impact or low-impact, non-pedestrian collision. In this exemplifying embodiment, the waiting period is set at least to 15 ms. This will result in a total time period from collision to full inflation of the airbag of about 15 + 30 = 45 ms, given that the detected object is determined to be a pedestrian and the airbag is activated.

To optimize the protective effect of the airbag, the waiting period may in this exemplifying embodiment advantageously be set to approximately 30 ms, in which case the total time period from collision to full inflation of the airbag is about 30 + 30 = 60 ms. Hence, the airbag is fully inflated at the instant the pedestrian impacts with the airbag, and has not yet started to deflate.

In another embodiment of the present invention, in case the waiting period has elapsed and the measure of the degree of impact is equal to or below the lower impact threshold, no activation of the pedestrian protection mechanism is performed. Thus, in case of low-energy impact with the object, it can be concluded that the pedestrian protection mechanism should not be activated as previously discussed, since it will have no or small protective effect. The low-energy impact could imply low vehicle speed, or that the object is not a pedestrian but for instance a smaller animal, such as a cat or a dog.

In a further embodiment of the present invention, in case the waiting period has elapsed and the measure of the degree of impact is equal to or above the upper impact threshold, no activation of the pedestrian protection mechanism is performed. Thus, in case of high-energy impact with the object, it can be concluded that the pedestrian protection mechanism should not be activated as previously discussed, since it could have a counterproductive effect. The high-energy impact could imply high vehicle speed, or that the object is not a pedestrian but for instance a vehicle.

In both preceding embodiments, it can advantageously be concluded that the waiting period applied in the activation device configured to activate the pedestrian protection mechanism according to the present invention between the time of object impact with the vehicle and the decision whether to activate the protection mechanism or not will result in a more robust pedestrian protection system.

In a further embodiment, by continuously recording the signal indicative of degree of impact with the object during the waiting period, it can advantageously be ascertained to a higher degree whether the pedestrian protection mechanism in fact should be activated or not.

In an embodiment of the present invention, not only the waiting period, but also the setting of the impact thresholds takes into account the acquired vehicle speed. For instance, any given object will result in a higher degree of impact at high-speed collision with the vehicle. As an example, a collision with a dog at 40 km/h could result in the same degree of impact as collision with an adult pedestrian at 20 km/h. In case of pedestrian collision at 40 km/h, the pedestrian protection mechanism should typically be activated, whereas in the case of the collision with the dog, no activation should be performed. Thus, by adapting the setting of the upper and lower impact thresholds to the actual speed of the vehicle before collision, the varying degree of impact of an object at different vehicle speeds is accounted for. In the preceding example, the collision with the dog at 40 km/h should typically result in a degree of impact which falls under the lower impact threshold, and the pedestrian protection mechanism will as result not be activated.

In further embodiments of the present invention, the waiting period and/or the impact thresholds could be based on the vehicle speed, ambient temperature of the pedestrian protection mechanism, information from a pre-crash sensor, etc.

It should be noted that the waiting period never can be set to be longer than the difference between the time it takes for the pedestrian to impact with the protection mechanism from the instant of collision, and the time required to activate the protection mechanism. If for instance the deployment time of an airbag is 30 ms, and the time from pedestrian collision with the car up until estimated pedestrian impact with the air bag at the current car speed is 35 ms, the waiting period cannot be set to be any longer than 5 ms; at a maximum of 5 ms after collision, the air bag must be deployed in order to be fully inflated 35 ms later when the pedestrian impacts with the air bag.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Figure 1 shows an activation device according to an embodiment of the present invention;
Figure 2 illustrates impact signals of three different vehicle collision scenarios according to embodiments of the present invention;
Figure 3 illustrates a flowchart of an embodiment of a method according to the present invention; and
Figure 4 illustrates timing of activation of a pedestrian protection mechanism according to an embodiment of the present invention.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

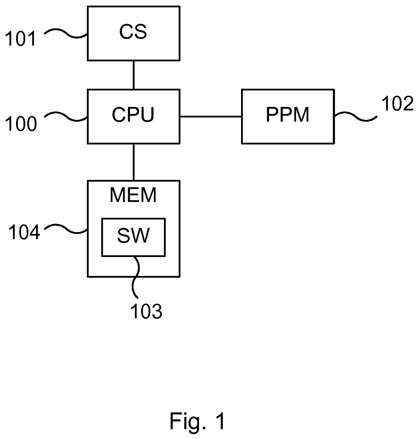

Figure 1 illustrates an embodiment of an activation device 100 configured to activate a pedestrian protection mechanism according to an embodiment of the present invention. The protection activation device is typically embodied in the form of a microprocessor (CPU). The CPU 100 communicates with a collision sensor (CS) 101, which detects collision with an object. The collision sensor 101 may for instance be implemented in the form of a contact sensor arranged in a bumper of the vehicle. Further, the CPU 100 is in communication with a pedestrian protection mechanism (PPM) 102 such as an exterior airbag located under the hood of the vehicle and arranged to be deployed atop of the hood in case of vehicle collision with a pedestrian, as previously described.

The CPU 100 may be part of a so called Electronic Control Unit (ECU) of the vehicle, which typically is implemented by one or more microprocessors executing appropriate software for controlling various systems and components in the vehicle. A vehicle may contain a great number of interconnected ECUs for controlling all properties of the vehicle such as a brake control module (BCM) or a speed control module (SCM). The vehicle could comprise a particular crash ECU receiving information from a battery monitoring unit (BMU), which detects various physical properties of the vehicle battery such as voltage, current, temperature, state of charge (SOC) etc., for management of the battery. The CPU 100 thus has access to a great amount of vehicle information, such as vehicle speed, ambient temperature, weather conditions, etc.

Typically, CPU 100 is embodied in the form of one or more microprocessors arranged to execute a computer program (SW) 103 downloaded to a suitable storage medium (MEM) 104 associated with the microprocessor, such as a Random Access Memory (RAM), a Flash memory or a hard disk drive. The CPU 100 is operative to carry out the method according to embodiments of the present invention, as will be described in the following, when the appropriate computer program 103 comprising computer-executable instructions is downloaded to the storage medium 104 and executed by the CPU 100. The storage medium 104 may also be a computer program product comprising the computer program 103. Alternatively, the computer program 103 may be transferred to the storage medium 104 by means of a suitable computer program product, such as a Digital Versatile Disc (DVD) or a memory stick. As a further alternative, the computer program 103 may be downloaded to the storage medium 104 over a network. The CPU 100 may alternatively be embodied in the form of a digital signal processor (DSP), an application specific integrated circuit (ASIC), a field-programmable gate array (FPGA), a complex programmable logic device (CPLD), etc.

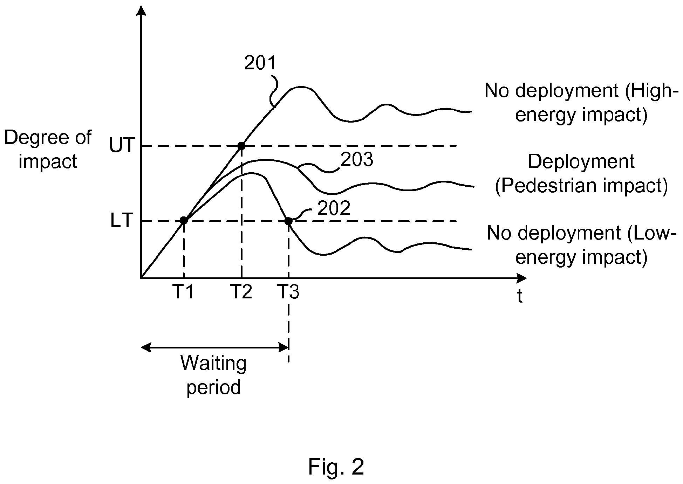

Figure 2 illustrates three different situations 201-203 of a vehicle collision with an object, where each signal 201, 202 and 203 represents a different degree of impact as indicated by the collision sensor 101 of Figure 1. In case of vehicle collision with an object, a time period of T1 will elapse before the signal indicative of the degree of impact with the vehicle exceeds a lower impact threshold (LT) thus indicating pedestrian impact.

In a high-impact situation, signal 201 will continue to rise to indicate a high-energy impact and at time T2, the signal 201 crosses the upper impact threshold (UT) and enters the high-energy impact zone, in which case the pedestrian protection mechanism exemplified in the form of an airbag should not be deployed.

To the contrary, in a low-impact situation, at time T3, signal 202 crosses LT (after first having entered the pedestrian impact zone at T1), and enters the low-energy impact zone, in which case the airbag should not be deployed.

Thus, in case of a pedestrian-impact situation illustrated with signal 203 remaining between lower and upper impact thresholds LT and UT, in which situation the deployment of the airbag should be activated, it is still necessary in this particular example to wait until T3 before activating the airbag in order to avoid a "false positive", i.e. to avoid deployment of the airbag at any instance between T1 and T3, since the impact situation could have been the low-impact situation as illustrated by signal 202 (or the high-impact situation of signal 201).

Consequently, according to embodiments of the present invention, a waiting period equal to T3 is applied from the instant of vehicle collision with an object up until activation of the airbag, which waiting period advantageously provides for a more robust activation of the pedestrian protection mechanism, since transient effects which possibly could cause "false" activation of the airbag are accounted for.

It should be noted that this is an exemplifying embodiment, and that the time T2 for the signal 201 to enter and remain within the high-energy impact zone could be longer than the time T3 required for the signal 202 to enter and remain within the low-energy impact zone could. In such a case, the waiting period would be set to T2 instead of T3.

With further reference to Figures 1 and 2, in an embodiment of the present invention, the CPU 100 continuously samples values of the signal indicative of degree of impact with the object received from the collision sensor 101. Thus, from the instant of collision, the signal 201-203 is carefully traced such that information regarding its transient course advantageously is attained. In such an embodiment, it may be possible to dynamically adjust the waiting period on the basis of the continuously obtained information.

In an alternative embodiment, the CPU 100 samples one or a few values of the signal indicative of degree of impact with the object received from the collision sensor 101. Thus, only at the end of the waiting period is the signal 201-203 sampled. In such an embodiment, continuously sampling and processing data from the collision sensor 101 need not burden the CPU 100. In case of a (relatively) long waiting period, it may suffice to sample only a single or few values of the signal, since transient effects of the signal has settled.

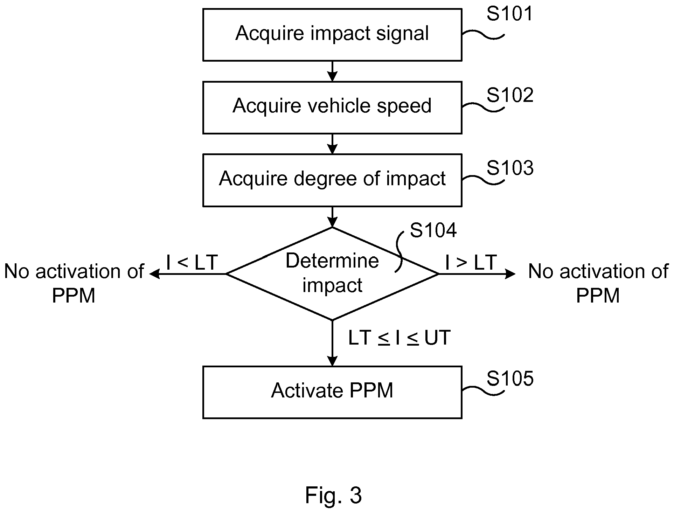

Figure 3 illustrates a flowchart of a method according to an embodiment of the present invention as performed by the CPU 100 of Figure 1. In a first step S101, the CPU 100 acquires a signal indicative of whether the motor vehicle, such as a car, impacts with an object from the collision sensor 101. Further, since a number of parameters subsequently utilized for determining whether to activate the pedestrian protection mechanism 102, being e.g. an exterior airbag, are dependent on vehicle speed, the CPU 100 acquires in a second step S102 a signal indicative of vehicle speed just before time of impact with the object.

Previously, an embodiment of the present invention has been described where vehicle speed was assumed to be 40 km/h. In the following, an embodiment will be described where the vehicle speed is 20 km/h. Again with reference to the flowchart of Figure 3, it is assumed that for a car travelling at 20km/h, the time period between the instant of collision with an object and the instant at which it can be detected, from a signal indicative of degree of impact with the object, whether the object is a pedestrian - or something causing a greater impact - is about 20 ms. Hence, with reference to the collision graph of Figure 2, T1 would in this particular example be 20 ms. Moreover, in order to ensure whether the object in fact is not a pedestrian but an object causing a high-energy impact (or alternatively a low-energy impact) with the car, such as a tree or another vehicle, another 10 ms of settling for the signal indicative of degree of impact is typically required. The time period for detecting a high-energy or low-energy impact is thus approximately 20 +10 = 30 ms at a car speed of 20km/h. Again with reference to the collision graph of Figure 2, T2 or T3 (depending on which occur latest; T3 in the example of Figure 2) would be set to 30 ms.

Hence, in step S103, either continuously during the waiting period of 30 ms, or at one or a few instances at the end of the waiting period, the CPU 100 acquires from the collision sensor 101 a signal indicative of degree of impact with the object. Thereafter, in step S104, after the waiting period of 30 ms has elapsed since the time of impact, it is determined whether a measure I of the degree of impact is above a lower impact threshold LT and below an upper impact threshold UT. Thus, given that LT ≤ I ≤ UT, the deployment of the airbag 102 is activated in step S105. To the contrary, if after the waiting period of 30 ms has elapsed and I < LT or I > UT, the CPU 100 will not activate the deployment of the airbag 102. Hence, by introducing the waiting period, unnecessary activation of the airbag is advantageously avoided.

Further, as previously has been discussed, the inflation time of the airbag is about 30 ms. This will, at a car speed of 20 km/h, result in a total time period from collision to full inflation of the airbag of about 30 + 30 = 60 ms, given that the detected object is determined to be a pedestrian and the airbag is activated.

At 20 km/h, it is further assumed that the time period between pedestrian collision with the car and the pedestrian impacting the airbag is about 90 ms. Thus, in practice, even though the CPU 100 only requires a waiting period of 30 ms to determine whether the object is a pedestrian the waiting period may in an exemplifying embodiment advantageously be set to approximately 60 ms to optimize the protective effect of the airbag, in which case the total time period from collision to full inflation of the airbag is about 60 + 30 = 60 ms. Hence, the airbag is fully inflated at the instant the pedestrian impacts with the airbag, and has not yet started to deflate.

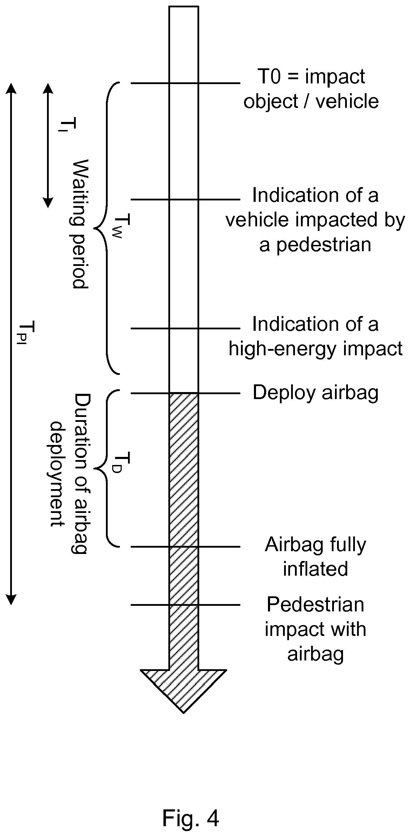

Figure 4 illustrates timing of an exemplifying embodiment of the present invention at a vehicle speed of 40 km/h. Assuming that for a car travelling at 40km/h, the time period between the instant of collision with an object and the instant at which it can be detected, from a signal indicative of degree of impact with the object, whether the object is a pedestrian is about 10 ms. This is referred to as T1 (cf. Figure 2) Moreover, in order to ensure whether the object in fact is not a pedestrian but an object causing a high-energy (or low-energy) impact with the car, another 5 ms of settling of the signal indicative of degree of impact is typically required. Thus, the time period for detecting a high-energy impact is approximately 15 ms at a car speed of 40km/h.

Further, as previously was mentioned, it is assumed that a hood airbag 102 will typically deploy immediately upon activation and fully inflate within about 30 ms. This is referred to as T_{D}. At 40 km/h, it is further assumed that the time period between pedestrian collision with the car and the pedestrian impacting the airbag 102 is about 60 ms. This is referred to as T_{PI}.

Thus, the CPU 100 controlling the airbag 102 will advantageously introduce a time period, i.e. a waiting period Tw, from the instant of collision with the object to the instant at which it is determined whether the airbag should be activated or not in order to avoid deployment of the airbag in case of a high-impact or low-impact, non-pedestrian collision. In this exemplifying embodiment, the waiting period Tw is set at least to 15 ms. This will result in a total time period from collision to full inflation of the airbag of about 15 + 30 = 45 ms, given that the detected object is determined to be a pedestrian and the airbag is activated.

As previously mentioned, to optimize the protective effect of the airbag, the waiting period may in this exemplifying embodiment advantageously be set to approximately 30 ms, in which case the total time period from collision to full inflation of the airbag is about 30 + 30 = 60 ms. Hence, the airbag is fully inflated at the instant T_{PI} the pedestrian impacts with the airbag, and has not yet started to deflate.

This is also preferred in case not only vehicle speed is taken into account, but also pre-crash information (typically supplied to the CPU 100 by the collision sensor 101) indicating multiple collisions. In such a case, it is important that the deployment of airbag is controlled such that the airbag is fully (or at least nearly fully) inflated at the time of the first collision, such that there is pressure left in the airbag at the instant of the second collision.

In a further embodiment, not only vehicle speed is considered when applying the waiting period, but also ambient temperature of the airbag. For, instance the deployment time of an airbag at - 30°C may be twice that of the same airbag at warmer + 30°C. Thus, again with reference to Figure 4, the waiting period Tw may have to be adjusted to take into account a varying time of deployment T_{D}. For instance, in case the waiting period Tw is extended from 15 ms to 30 ms as discussed hereinabove and the deployment time T_{D} due to temperature is extended from 30 ms to for instance 40 ms; the waiting period Tw can be reduced from 30 ms down to 20 ms.

In still an exemplifying embodiment of the present invention, with reference to Figure 4, but where different timing values are used, the waiting period Tw is adapted in such a manner that it never can be set to be longer than the difference between the time T_{PI} it takes for the pedestrian to impact with the protection mechanism from the instant of collision, and the time T_{D} required to fully inflate the airbag. If for instance the deployment time T_{D} of an airbag is 30 ms, and the time from pedestrian collision with the car up until estimated pedestrian impact with the air bag at a car speed of 80km/h is 35 ms, the waiting period Tw cannot be set to be any longer than 5 ms; at a maximum of 5 ms after collision, the air bag must be deployed in order to be fully inflated 35 ms later when the pedestrian impacts with the air bag. Thus, regardless of whether it can be ascertained after a waiting period Tw of 5 ms whether the object is a pedestrian or not, the deployment of the airbag is still activated.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method at a motor vehicle of activating a pedestrian protection mechanism, comprising:
acquiring (S101) a signal indicative of whether the motor vehicle impacts with an object;
acquiring (S102) a signal indicative of vehicle speed before time of impact; the method further being **characterized in** comprising
acquiring (S103) a signal indicative of degree of impact with the object;
determining (S104), after a time period has elapsed since the time of impact, the time period being based at least on the acquired vehicle speed, whether a measure of the degree of impact is above a lower impact threshold and below an upper impact threshold, wherein values of the signal indicative of degree of impact with the object continuously are acquired up until an end of said time period; and if so
activating (S105) the pedestrian protection mechanism.

2. The method of claim 1, wherein in case it is determined after the time period has elapsed that the measure of the degree of impact is equal to or below the lower impact threshold, no activation of the pedestrian protection mechanism is performed.

3. The method of any one of the preceding claims, wherein in case the time period has elapsed and the measure of the degree of impact is equal to or above the higher impact threshold, no activation of the pedestrian protection mechanism is performed.

4. The method of any one of the preceding claims, wherein the lower and upper impact thresholds are set based on the acquired vehicle speed.

5. The method of any one of the preceding claims, said time period further being based on any one or more of: temperature, pre-crash information, acceleration, estimated time of the object impacting with the pedestrian protection mechanism from time of impact with the vehicle, and estimated time of deployment of the pedestrian protection mechanism.

6. An activation device (100) in a motor vehicle configured to activate a pedestrian protection mechanism (101), operative to:
acquire a signal indicative of whether the motor vehicle impacts with an object;
acquire a signal indicative of vehicle speed before time of impact; the activation device further being **characterized in** being operative to
acquire a signal indicative of degree of impact with the object;
determine, after a time period has elapsed since the time of impact, the time period being based at least on the acquired vehicle speed, whether a measure of the degree of impact is above a lower impact threshold and below an upper impact threshold, wherein values of the signal indicative of degree of impact with the object continuously are acquired up until an end of said time period; and if so
activate the pedestrian protection mechanism (101).

7. The activation device (100) of claim 6, wherein in case it is determined after the time period has elapsed that the measure of the degree of impact is equal to or below the lower impact threshold, no activation of the pedestrian protection mechanism is performed.

8. The activation device (100) of any one of claims 6-7, wherein in case the time period has elapsed and the measure of the degree of impact is equal to or above the higher impact threshold, no activation of the pedestrian protection mechanism is performed.

9. The activation device (100) of any one of claims 6-81, said time period further being based on any one or more of: temperature, pre-crash information, acceleration, estimated time of the object impacting with the pedestrian protection mechanism from time of impact with the vehicle, and estimated time of deployment of the pedestrian protection mechanism.

10. A computer program (103) comprising computer-executable instructions for causing a device to perform at least parts of the steps recited in any one of claims 1-5 when the computer-executable instructions are executed on a processing unit (100) included in the device.

11. A computer program product comprising a computer readable medium (104), the computer readable medium having the computer program (103) according to claim 10 embodied therein.

## Patentansprüche

1. Verfahren an einem Kraftfahrzeug zum Aktivieren eines Fußgängerschutzmechanismus, umfassend:
Erfassen (S101) eines Signals, das anzeigt, ob das Kraftfahrzeug auf ein Objekt aufprallt;
Erfassen (S102) eines Signals, das die Fahrzeuggeschwindigkeit vor dem Zeitpunkt des Aufpralls anzeigt; wobei das Verfahren ferner **dadurch gekennzeichnet ist, dass** es Folgendes umfasst:
Erfassen (S103) eines Signals, das den Grad des Aufpralls auf das Objekt anzeigt;
Feststellen (S104), nachdem ein Zeitraum seit dem Zeitpunkt des Aufpralls vergangen ist, wobei der Zeitraum zumindest auf der erfassten Fahrzeuggeschwindigkeit beruht, ob ein Maß für den Grad des Aufpralls über einer unteren Aufprallschwelle und unter einer oberen Aufprallschwelle liegt, wobei Werte für das Signal, das den Grad des Aufpralls auf das Objekt anzeigt, bis zu einem Ende des Zeitraums kontinuierlich erfasst werden; und wenn dies zutrifft,
Aktivieren (S105) des Fußgängerschutzmechanismus.

2. Verfahren nach Anspruch 1, wobei keine Aktivierung des Fußgängerschutzmechanismus erfolgt, wenn nach Ablauf des Zeitraums festgestellt wird, dass das Maß für den Grad des Aufpralls kleiner gleich der unteren Aufprallschwelle ist.

3. Verfahren nach einem der vorhergehenden Ansprüche, wobei keine Aktivierung des Fußgängerschutzmechanismus erfolgt, falls der Zeitraum abgelaufen ist und das Maß für den Grad des Aufpralls größer gleich der höheren Aufprallschwelle ist.

4. Verfahren nach einem der vorhergehenden Ansprüche, wobei die untere und obere Aufprallschwelle auf Grundlage der erfassten Fahrzeuggeschwindigkeit festgelegt werden.

5. Verfahren nach einem der vorhergehenden Ansprüche, wobei der Zeitraum ferner auf Folgendem beruht: Temperatur, Informationen zum Zeitpunkt vor dem Zusammenstoß, Beschleunigung, geschätzter Zeitpunkt des Zusammenstoßes des Objekts mit dem Fußgängerschutzmechanismus nach dem Zeitpunkt des Zusammenstoßes mit dem Fahrzeug und/oder geschätzte Auslösezeit des Fußgängerschutzmechanismus.

6. Aktivierungsvorrichtung (100) in einem Kraftfahrzeug, die so ausgelegt ist, dass sie einen Fußgängerschutzmechanismus (101) aktiviert, der so arbeitet, dass er:
ein Signal erfasst, das anzeigt, ob das Kraftfahrzeug auf ein Objekt aufprallt;
ein Signal anzeigt, das die Fahrzeuggeschwindigkeit vor dem Zeitpunkt des Aufpralls anzeigt; wobei die Aktivierungsvorrichtung ferner **dadurch gekennzeichnet ist, dass** sie so arbeitet, dass sie
ein Signal erfasst, das den Grad des Aufpralls auf das Objekt anzeigt;
nachdem ein Zeitraum seit dem Zeitpunkt des Aufpralls vergangen ist, wobei der Zeitraum zumindest auf der erfassten Fahrzeuggeschwindigkeit beruht, feststellt, ob ein Maß für den Grad des Aufpralls über einer unteren Aufprallschwelle und unter einer oberen Aufprallschwelle liegt, wobei Werte für das Signal, das den Grad des Aufpralls auf das Objekt anzeigt, bis zu einem Ende des Zeitraums kontinuierlich erfasst werden; und wenn dies zutrifft,
den Fußgängerschutzmechanismus (101) aktiviert.

7. Aktivierungsvorrichtung (100) nach Anspruch 6, wobei keine Aktivierung des Fußgängerschutzmechanismus erfolgt, wenn nach Ablauf des Zeitraums festgestellt wird, dass das Maß für den Grad des Aufpralls kleiner gleich der unteren Aufprallschwelle ist.

8. Aktivierungsvorrichtung (100) nach einem der Ansprüche 6 bis 7, wobei keine Aktivierung des Fußgängerschutzmechanismus erfolgt, falls der Zeitraum abgelaufen ist und das Maß für den Grad des Aufpralls größer gleich der höheren Aufprallschwelle ist.

9. Aktivierungsvorrichtung (100) nach einem der Ansprüche 6 bis 8, wobei der Zeitraum ferner auf Folgendem beruht: Temperatur, Informationen zum Zeitpunkt vor dem Aufprall, Beschleunigung, geschätzte Zeit des Zusammenstoßes des Objekts mit dem Fußgängerschutzmechanismus nach dem Zeitpunkt des Zusammenstoßes mit dem Fahrzeug und/oder geschätzte Auslösezeit des Fußgängerschutzmechanismus.

10. Computerprogramm (103) das von einem Computer ausführbare Befehle umfasst, die eine Vorrichtung dazu veranlassen sollen, zumindest Teile der in einem der Ansprüche 1 bis 5 genannten Schritte durchzuführen, wenn die von einem Computer ausführbaren Befehle in einer Prozessoreinheit (100) ausgeführt werden, die in der Vorrichtung enthalten ist.

11. Computerprogrammprodukt, das ein computerlesbares Medium (104) umfasst, wobei auf dem computerlesbaren Medium das Computerprogramm (103) nach Anspruch 10 verkörpert ist.

## Revendications

1. Procédé sur un véhicule à moteur destiné à l'activation d'un mécanisme de protection des piétons, comprenant :
l'acquisition (S101) d'un signal indiquant si le véhicule à moteur percute un objet ;
l'acquisition (S102) d'un signal indiquant la vitesse de véhicule avant le moment de l'impact ; le procédé étant en outre **caractérisé en ce qu'**il comprend
l'acquisition (S103) d'un signal indiquant le degré d'impact avec l'objet ;
la détermination (S104), après qu'une période de temps s'est écoulée depuis le moment de l'impact, la période de temps étant basée au moins sur la vitesse de véhicule acquise, si une mesure du degré d'impact est supérieure à un seuil d'impact inférieur et inférieure à un seuil d'impact supérieur, des valeurs du signal indiquant le degré d'impact avec l'objet étant acquises en continu jusqu'à une fin de ladite période de temps ; et si c'est le cas
l'activation (S105) du mécanisme de protection des piétons.

2. Procédé selon la revendication 1, dans lequel, s'il est déterminé après que la période de temps s'est écoulée, que la mesure du degré d'impact est égale ou inférieure au seuil d'impact inférieur, aucune activation du mécanisme de protection des piétons n'est effectuée.

3. Procédé selon l'une quelconque des revendications précédentes, dans lequel, si la période de temps s'est écoulée et que la mesure du degré d'impact est égale ou supérieure au seuil d'impact supérieur, aucune activation du mécanisme de protection des piétons n'est effectuée.

4. Procédé selon l'une quelconque des revendications précédentes, dans lequel les seuils d'impact inférieur et supérieur sont définis sur la base de la vitesse de véhicule acquise.

5. Procédé selon l'une quelconque des revendications précédentes, ladite période de temps étant en outre basée sur un quelconque ou plusieurs des éléments suivants : température, informations antérieures à la collision, accélération, moment estimé de l'impact de l'objet avec le mécanisme de protection des piétons à partir du moment d'impact avec le véhicule, et moment estimé du déploiement du mécanisme de protection des piétons.

6. Dispositif d'activation (100) dans un véhicule à moteur, configuré pour activer un mécanisme de protection des piétons (101), fonctionnel pour :
acquérir un signal indiquant si le véhicule à moteur percute un objet ;
acquérir un signal indiquant la vitesse de véhicule avant le moment de l'impact ; le dispositif d'activation étant en outre **caractérisé en ce qu'**il est fonctionnel pour
acquérir un signal indiquant le degré d'impact avec l'objet ;
déterminer, après qu'une période de temps s'est écoulée depuis le moment de l'impact, la période de temps étant basée au moins sur la vitesse de véhicule acquise, si une mesure du degré d'impact est supérieure à un seuil d'impact inférieur et inférieure à un seuil d'impact supérieur, des valeurs du signal indiquant le degré d'impact avec l'objet étant acquises en continu jusqu'à une fin de ladite période de temps ; et si c'est le cas
activer le mécanisme de protection des piétons (101).

7. Dispositif d'activation (100) selon la revendication 6, dans lequel, s'il est déterminé après que la période de temps s'est écoulée, que la mesure du degré d'impact est égale ou inférieure au seuil d'impact inférieur, aucune activation du mécanisme de protection des piétons n'est effectuée.

8. Dispositif d'activation (100) selon l'une quelconque des revendications 6 et 7, dans lequel, si la période de temps s'est écoulée et que la mesure du degré d'impact est égale ou supérieure au seuil d'impact supérieur, aucune activation du mécanisme de protection des piétons n'est effectuée.

9. Dispositif d'activation (100) selon l'une quelconque des revendications 6 à 8, ladite période de temps étant en outre basée sur un quelconque ou plusieurs des éléments suivants : température, informations antérieures à la collision, accélération, moment estimé de l'impact de l'objet avec le mécanisme de protection des piétons à partir du moment d'impact avec le véhicule, et moment estimé du déploiement du mécanisme de protection des piétons.

10. Programme informatique (103) comprenant des instructions pouvant être exécutées par ordinateur destinées à amener un dispositif à exécuter au moins des parties des étapes citées dans l'une quelconque des revendications 1 à 5 quand les instructions pouvant être exécutées par ordinateur sont exécutées sur une unité de traitement (100) incluse dans le dispositif.

11. Produit programme informatique comprenant un support lisible par ordinateur (104), le support lisible par ordinateur comportant, intégré dans celui-ci, le programme informatique (103) selon la revendication 10.
